# EUROPÄISCHE PATENTSCHRIFT

(11) **EP 1 244 716 B1**
(45) Veröffentlichungstag und Bekanntmachung des Hinweises auf die Patenterteilung: **09.02.2005**
(21) Anmeldenummer: 00989902.2
(22) Anmeldetag: 29.11.2000
(51) Int. Cl.: C08F 20/18, C08F 2/06, C08F 4/10, C08F 4/50, C10M 145/14

(54) **VERFAHREN ZUR HERSTELLUNG EINER ZUSAMMENSETZUNG, DIE POLYMERE ESTERVERBINDUNGEN MIT LANGKETTIGEN ALKYLRESTEN AUFWEIST, SOWIE VERWENDUNG DIESER ZUSAMMENSETZUNG**
METHOD FOR PRODUCING A COMPOSITION THAT CONTAINS POLYMER ESTER COMPOUNDS WITH LONG-CHAIN ALKYL GROUPS, AND USE OF SUCH A COMPOSITION
PROCEDE DE PRODUCTION D'UNE COMPOSITION PRESENTANT DES COMPOSES ESTER POLYMERES AVEC DES RESTES ALKYLE A CHAINE LONGUE ET UTILISATION DE CETTE COMPOSITION

(30) Priorität: 30.11.1999 US 450746
(43) Veröffentlichungstag der Anmeldung: 02.10.2002
(73) Patentinhaber: RohMax Additives GmbH, 64293 Darmstadt (DE)
(72) Erfinder: ROOS, Sebastian, 60318 Frankfurt am Main (DE); EISENBERG, Boris, 64289 Darmstadt (DE); BOLLINGER, Joseph, Martin, N. Wales, PA 19454 (US); SCHERER, Markus, 66822 Lebach (DE)
(86) Internationale Anmeldenummer: PCT/EP2000/011860
(87) Internationale Veröffentlichungsnummer: WO 2001/040328

(56) Entgegenhaltungen:
- EP-A- 0 570 093
- EP-A- 0 682 046
- WO-A-97/47661
- US-A- 5 807 937
- WANG, J.-S. ET AL: "Contolled/"living"radical polymerisation" MACROMOLECULES, Bd. 28, Nr. 23, Seiten 7901-7910, XP000984931 in der Anmeldung erwähnt

## Beschreibung

Die Erfindung betrifft ein Verfahren zur Herstellung einer Zusammensetzung, die polymere Esterverbindungen mit langkettigen Alkylresten aufweist, wobei man ethylenisch ungesättigte Monomermischungen, die mindestens 50 Gew.-% ethylenisch ungesättigte Esterverbindungen mit Alkyl- oder Heteroalkylketten mit mindestens 6 Kohlenstoffatomen enthalten, mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können, polymerisiert. Die Erfindung bezieht sich auch auf die Verwendung dieser Polymerzusammensetzungen sowie auf Verfahren zur Isolierung von Polymeren aus einer solchen Polymerlösung.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe ebenso wie eine geringe Konzentration freier Radikale im Gleichgewicht wesentlich für eine enge Molekulargewichtsverteilung sind. Ist die Konzentration an freien Radikalen zu hoch, treten typische Abbruchreaktionen auf, die für eine breite Molekulargewichtsverteilung verantwortlich sind. Die Austauschrate ist beispielsweise abhängig von der übertragbaren Atomgruppe, dem Übergangsmetall, den Liganden und dem Anion der Übergangsmetallverbindung. Wertvolle Hinweise zur Auswahl dieser Komponenten findet der Fachmann beispielsweise in WO 98/40415.

Die Vorteile bekannter ATRP-Polymerisationsverfahren beschränken sich jedoch hauptsächlich auf Monomere, die selbst polar sind oder die in polaren Medien eine gute Löslichkeit zeigen. Zwar ist die vereinzelte Verwendung von unpolaren aprotischen Kohlenwasserstoffen wie Benzol, Toluol, Xylol, Cyclohexan und Hexan ebenfalls literaturbekannt, die mit diesen Lösungsmitteln hergestellten Polymere weisen jedoch deutlich höhere Polydispersitäten auf. Dieser Effekt wird beispielsweise in WO 98/40415 beschrieben. In Pol. Preprint (ACS, Div. Pol. Chem.), 1999, 40(2), 432 beschreiben M.J.Ziegler et al. unter anderem eine schlechte Steuerbarkeit der Polymerisation von t-Butylmethacrylat, falls diese in Masse stattfindet. Bei Verwendung von ca. 20 bis 25 Gew.-% an polaren Lösungsmitteln läßt sich sowohl die Molmasse als auch die Polydispersität verbessern. Allerdings können ethylenisch ungesättigte Monomermischungen, die zu mindestens 50 Gew.-% ethylenisch ungesättigte Esterverbindungen mit Alkyl- oder Heteroalkylketten mit mindestens 6 Kohlenstoffatome enthalten, wegen der begrenzten Löslichkeit von ethylenisch ungesättigten Esterverbindungen mit Alkyl- oder Heteroalkylresten mit mindestens 6 Kohlenstoffatomen in polaren Lösungsmitteln nur schlecht mittels der bekannten ATRP-Verfahren polymerisiert werden. Darüber hinaus müssen diese großen Mengen an polaren Lösungsmitteln, je nach Verwendung, nach Herstellung der Polymere von der Zusammensetzung abgetrennt werden.

In Anbetracht des Standes der Technik ist es nun Aufgabe der vorliegenden Erfindung, Verfahren zur Herstellung einer Poly(meth)acrylatzusammensetzung zur Verfügung zu stellen, wobei die in der Zusammensetzung enthaltenen Polymere zu mindestens 50 Gew.-% aus (Meth)acrylaten mit Alkyl- oder Heteroalkylketten mit mindestens 6 Kohlenstoffatomen aufgebaut sein sollen. Darüber hinaus sollen die in der Zusammensetzung enthaltenen Polymere eine enge Molekulargewichtsverteilung aufweisen. Insbesondere soll bei der Herstellung der Polymermischung der Einsatz aufwendiger Verfahren, wie etwa der anionischen Polymerisation, vermieden werden.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Poly(meth)acrylatzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Hinsichtlich des Verfahrens zur Herstellung von Polymeren liefert Anspruch 11 eine Lösung der zugrunde liegenden Aufgabe, während Anspruch 12 eine bevorzugte Verwendung einer gemäß dem vorliegenden Verfahren hergestellten Polymerlösung schützt.

Dadurch, daß man ethylenisch ungesättigte Monomere, die 50 bis 100 Gew.-%, bezogen auf das Gesamtgewicht der ethylenisch ungesättigten Monomere, eine oder mehrere ethylenisch ungesättigte Esterverbindungen der Formel (I) 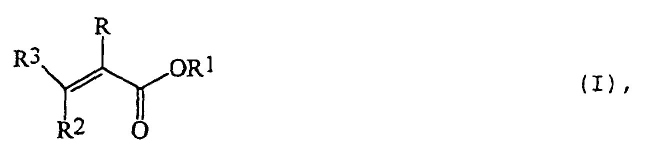 worin R Wasserstoff oder Methyl, R¹ einen linearen oder verzweigten Alkylrest mit 6 bis 40 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt, aufweisen, in Gegenwart von 5 bis 95 Gew.-% Mineralöl, bezogen auf das Gesamtgewicht der Zusammensetzung, polymerisiert, gelingt es auf nicht ohne weiteres vorhersehbare Weise ein Verfahren zur Herstellung einer Poly(meth)acrylatzusammensetzung zur Verfügung zu stellen, mit welchem eine enge Verteilung der Polymere erzielt werden kann. Hierbei polymerisiert man ethylenisch ungesättigte Monomere mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können. Diese Herstellungsart ist besonders kostengünstig durchführbar und insofern technisch interessant.

Daß man Mineralöle mit besonderem Erfolg als Lösungsmittel einsetzen kann, ist insbesondere deswegen überraschend, weil viele der für die ATRP-Polymerisationsverfahren verwendeten Zusammensetzungen polare Lösungsmittel beinhalten. Die Polymerisation von Mischungen ethylenisch ungesättigter Monomere, die zu mindestens 50 Gew.-% ethylenisch ungesättigte Esterverbindungen mit längerkettigen Alkyl- oder Heteroalkylketten mit mindestens 6 Kohlenstoffatomen enthalten, ist wegen der begrenzten Löslichlichkeit dieser Verbindungen in polaren Lösungsmitteln erschwert. Verwendet man anstatt dessen unpolare Lösungsmittel, so stellt man fest, daß Polymermischungen mit wesentlich größeren Polydispersitäten als bei Verwendung von üblichen polaren Lösungsmitteln erhalten werden. Darüber hinaus sind die Ausbeuten an Polymer in unpolaren Lösungsmitteln vielfach geringer. Die Produkteigenschaften solcher breitverteilter Polymereigenschaften sind für viele technische Anwendungen, wie z. B. als Zusatz zu Schmierölen unzureichend, so daß andere um ein Vielfaches teurere Verfahren eingesetzt werden müssen.

Zugleich lassen sich durch das erfindungsgemäße Verfahren eine Reihe weiterer Vorteile erzielen. Hierzu gehören unter anderem:
⇒ Eine enge Verteilung der Polymere in den durch das Verfahren hergestellten Polymerzusammensetzungen.
⇒ Das erfindungsgemäße Verfahren erlaubt eine hervorragende Kontrolle des Molekulargewichts der in den Zusammensetzungen enthaltenen Polymeren.
⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.
⇒ Mit Hilfe des erfindungsgemäßen Verfahrens lassen sich hohe Ausbeuten erzielen.
⇒ Das erfindungsgemäße Verfahren ist arm an Nebenreaktionen.
⇒ Das Verfahren ist kostengünstig durchführbar.
⇒ Mit Hilfe des Verfahrens der vorliegenden Erfindung können Polymere mit einem vorher definierten Aufbau und gezielter Struktur hergestellt werden.

Kennzeichnend für das Verfahren ist der Einsatz eines Mineralöls als Lösungsmittel, um ethylenisch ungesättigte Monomermischungen, die mindestens 50 Gew.-% ethylenisch ungesättigte Esterverbindungen mit Alkyl- oder Heteroalkylketten mit mindestens 6 Kohlenstoffatomen enthalten, zu polymerisieren.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 40 Gew.-%. Gemäß einem interssanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8 %,
Verlust:
   6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5^{th} Edition on CD-ROM, 1997, Stichwort "lubricants and related products".

Dieses Lösungsmittel wird in einer Menge von 5 bis 95 Gew.-%, bevorzugt von 5 bis 80 Gew.-%, besonders bevorzugt von 5 bis 60 Gew.-% und ganz besonders bevorzugt von 10 bis 50 Gew.-%, bezogen auf das Gesamtgewicht der Mischung, eingesetzt.

Darüber hinaus kann die Zusammensetzung weitere Lösungsmittel aufweisen, wobei deren Art und Menge darauf beschränkt ist, daß hierdurch keine nachteilige Wirkung insbesondere auf die Polydispersität oder den Umsatz eintritt. Zu diesen Lösungsmitteln gehören beispielsweise synthetische Öle. Synthetische Öle sind unter anderem organische Ester, organische Ether, wie Siliconöle, und synthetische Kohlenwasserstoffe, insbesondere Polyolefine.

Gemäß dem Verfahren der vorliegenden Erfindung werden ethylenisch ungesättigte Monomere polymerisiert, die 50 bis 100 Gew.-%, bevorzugt 60 bis 100 Gew.-%, bezogen auf das Gesamtgewicht der ethylenisch ungesättigten Monomere, eine oder mehrere ethylenisch ungesättigte Esterverbindungen der Formel (I) 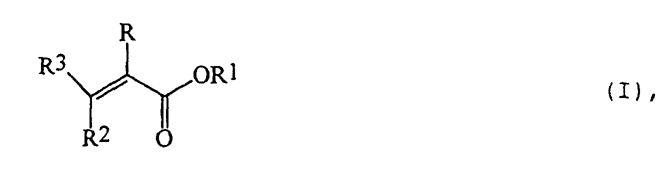 worin R Wasserstoff oder Methyl, R¹ einen linearen oder verzweigten Alkylrest mit 6 bis 40 Kohlenstoffatomen, vorzugsweise 6 bis 24 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt, aufweisen. Hierbei kann der Alkylrest linear, cyclisch oder verzweigt sein.

Zu diesen Verbindungen gemäß Formel (I) gehören (Meth)acrylate, Maleate und Fumarate, die jeweils mindestens einen Alkoholrest mit 6 bis 40 Kohlenstoffatomen aufweisen.

Hierbei sind (Meth)acrylate der Formel (II) bevorzugt 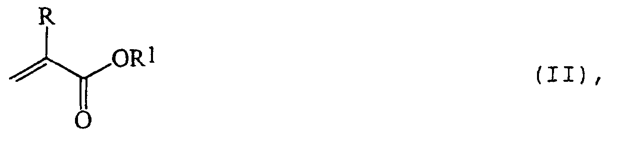 worin
R Wasserstoff oder Methyl und R¹ einen linearen oder verzweigten Alkylrest mit 6 bis 40 Kohlenstoffatomen bedeuten.

Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl (meth) acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat, Cyclohexyl(meth)acrylat, Bornyl(meth)acrylat.

Die Esterverbindungen mit langkettigem Alkoholrest lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7 - 11 und Acropol® 91 Ugine Kuhlmann.

Neben den als Komponente a) bezeichneten ethylenisch ungesättigten Esterverbindungen, die sich von Alkoholen mit 6 bis 40 Kohlenstoffen ableiten, kann die Monomermischung auch weitere ethylenisch ungesättigte Monomere enthalten, die mit den zuvor genannten Esterverbindungen copolymerisierbar sind. Zu diesen Monomeren gehören unter anderem
b) 0 bis 40 Gew.-%, insbesondere 0,5 bis 20 Gew.-% eines oder mehrerer (Meth)acrylate der Formel (III) 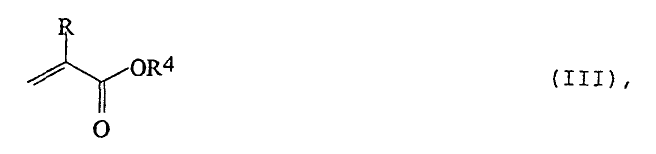 worin R Wasserstoff oder Methyl und R⁴ einen linearen oder verzweigten Alkylrest mit 1 bis 5 Kohlenstoffatomen bedeuten,
c) 0 bis 40 Gew.-%, insbesondere 0,5 bis 20 Gew.-% eines oder mehrerer (Meth)acrylate der Formel (IV) 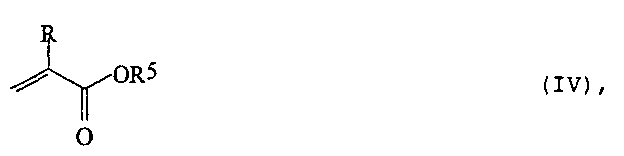 worin R Wasserstoff oder Methyl und R⁵ einen mit einer OH-Gruppe substituierten Alkylrest mit 2 bis 20, insbesondere 2 bis 6 Kohlenstoffatomen oder einen alkoxylierten Rest der Formel (V) 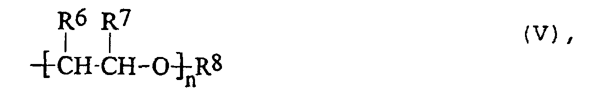 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-%, insbesondere 0,5 bis 20 Gew.-% eines oder mehrerer (Meth)acrylate der Formel (VI) 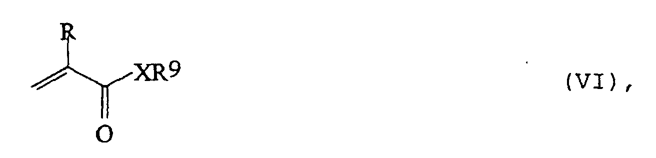 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht. Beispiele für Komponente b) sind unter anderem (Meth)acrylate, die sich von gesättigten Alkoholen ableiten, wie Methyl (meth)acrylat, Ethyl(meth)acrylat, n-Propyl(meth)acrylat, iso-Propyl(meth)acrylat, n-Butyl(meth)acrylat, tert-Butyl(meth)acrylat und Pentyl(meth)acrylat;
   Cycloalkyl(meth)acrylate, wie Cyclopentyl(meth)acrylat; (Meth)acrylate, die sich von ungesättigten Alkoholen ableiten, wie 2-Propinyl(meth)acrylat und Allyl(meth)acrylat, Vinyl(meth)acrylat.

(Meth)acrylate gemäß Formel (IV) sind dem Fachmann bekannt. Zu diesen zählen unter anderem Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2, 5-Dimethyl-1, 6-hexandiol(meth)acrylat, 1,10-Decandiol(meth)acrylat, 1,2-Propandiol(meth)acrylat; Polyoxyethylen- und Polyoxypropylen-Derivate der (Meth)acrylsäure, wie Triethylenglycol(meth)acrylat, Tetraethylenglycol(meth)acrylat und Tetrapropylengylcol(meth)acrylat.

Zu den (Meth)acrylaten bzw. (Meth)acrylamiden gemäß Formel (VI) (Komponente d)gehören unter anderem Amide der (Meth)acrylsäure, wie N-(3-Dimethylaminopropyl)methacrylamid, N-(Diethylphosphono)methacrylamid, 1-Methacryloylamido-2-methyl-2-propanol, N-(3-Dibutylaminopropyl)methacrylamid, N-t-Butyl-N-(diethylphosphono)methacrylamid, N,N-bis(2-Diethylaminoethyl)methacrylamid, 4-Methacryloylamido-4-methyl-2-pentanol, N-(Methoxymethyl)methacrylamid, N-(2-Hydroxyethyl)methacrylamid, N-Acetylmethacrylamid, N-(Dimethylaminoethyl)methacrylamid, N-Methyl-N-phenylmethacrylamid, N,N-Diethylmethacrylamid, N-Methylmethacrylamid, N,N-Dimethylmethacrylamid, N-Isopropylmethacrylamid; Aminoalkylmethacrylate, wie tris(2-Methacryloxyethyl)amin, N-Methylformamidoethylmethacrylat, 2-Ureidoethylmethacrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Die Komponente e) umfaßt insbesondere ethylenisch ungesättigte Monomere, die sich mit den ethylenisch ungesättigten Esterverbindungen der Formeln (I), (II), (III), (IV) und/oder (VI) copolymerisieren lassen.

Jedoch sind Comonomere zur Polymerisation gemäß der vorliegenden Erfindung besonders geeignet, die der Formel entsprechen: 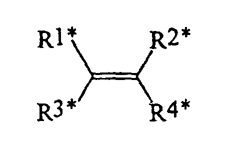 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR⁹⁻, worin R⁹⁻ Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)ₙ, bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Die Komponente e) umfaßt insbesondere ethylenisch ungesättigte Monomere, die sich mit den Esterverbindungen der Formel (I) copolymerisieren lassen. Hierzu gehören unter anderem Nitrile der (Meth)acrylsäure und andere stickstoffhaltige Methacrylate, wie Methacryloylamidoacetonitril, 2-Methacryloyloxyethylmethylcyanamid, Cyanomethylmethacrylat; Aryl(meth)acrylate, wie Benzylmethacrylat oder Phenylmethacrylat, wobei die Arylreste jeweils unsubstituiert oder bis zu vierfach substituiert sein können;
carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon; Glycoldimethacrylate, wie 1,4-Butandiolmethacrylat, 2-Butoxyethylmethacrylat, 2-Ethoxyethoxymethylmethacrylat, 2-Ethoxyethylmethacrylat, Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat; Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat; Oxiranylmethacrylate, wie 2,3-Epoxybutylmethacrylat, 3,4-Epoxybutylmethacrylat, Glycidylmethacrylat;
Phosphor-, Bor- und/oder Silicium-haltige Methacrylate, wie
2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat; schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid; Trimethacrylate, wie Trimethyloylpropantrimethacrylat;
Vinylhalogenide, wie beispielsweise Vinylchlorid, Vinylfluorid, Vinylidenchlorid und Vinylidenfluorid; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heteröcyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether;
Maleinsäure und Maleinsäurederivate, wie beispielsweise Mono- und Diester der Maleinsäure, wobei die Alkoholreste 1 bis 5 Kohlenstoffatome aufweisen, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure, wobei die Alkoholreste 1 bis 5 Kohlenstoffatome aufweisen;
Diene wie beispielsweise Divinylbenzol.

Neben Styrol sind als Comonomere insbesondere Monomere bevorzugt, die dispergierende Wirkungen haben, wie beispielsweise die zuvor genannten heterocyclischen Vinylverbindungen. Diese Monomere werden des weiteren als dispergierende Monomere bezeichnet.

Die zuvor genannten ethylenisch ungesättigten Monomere können einzeln oder als Mischungen eingesetzt werden. Es ist des weiteren möglich, die Monomerzusammensetzung während der Polymerisation zu variieren, um definierte Strukturen, wie beispielsweise Blockcopolymere, zu erhalten.

In bevorzugten Ausführungsformen des erfindungsgemäßen Verfahrens sind mindestens 70 Gewichtsprozent der ethylenisch ungesättigten Monomere, besonders bevorzugt mehr als 80 Gew.-% der ethylenisch ungesättigten Monomere, bezogen auf da Gesamtgewicht der ethylenisch ungesättigten Monomere, (Meth)acrylate, Maleate und/oder Fumarate mit Alkyl- oder Heteroalkylketten, die mindestens 6 Kohlenstoffatome enthalten.

Die zuvor genannten Monomere werden mittels Initiatoren, die eine übertragbare Atomgruppe aufweisen, polymerisiert. Im allgemeinen lassen sich diese Initiatoren durch die Formel Y-(X)ₘ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und -CO₂R, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

R¹¹R¹²R¹³C-X

R¹¹C(=O)-X

R¹¹R¹²R¹³Si-X

R¹¹R¹²N-X

R¹¹N-X₂

(R¹¹)ₙP(O)ₘ-X₃₋ₙ

(R¹¹O)ₙP(O)ₘ-X₃₋ₙ

und

(R¹¹)(R¹²O)P(O)ₘ-X,

worin X ausgewählt ist aus der Gruppe bestehend aus Cl, Br, I, OR¹⁰, [wobei R¹⁰ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 5 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] SR¹⁴, SeR¹⁴, OC(=O)R¹⁴, OP(=O)R¹⁴, OP(=O)(OR¹⁴)₂, OP(=O)OR¹⁴, O-N(R¹⁴)₂, S-C(=S)N(R¹⁴)₂, CN, NC, SCN, CNS, OCN, CNO und N₃ darstellt, wobei R¹⁴ eine Arylgruppe oder eine lineare oder verzweigte Alkylgruppe mit 1 bis 20, vorzugsweise 1 bis 10 Kohlenstoffatomen bedeutet, wobei zwei R¹⁴-Gruppen, falls vorhanden, zusammen einen 5, 6 oder 7-gliedrigen heterocyclischen Ring bilden können; und
R¹¹, R¹² und R¹³ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, R^{8*}₃Si, C(=Y*)R^{5*}, C(=Y*)NR^{6*}R^{7*}, wobei Y*, R^{5*}, R^{6*} und R^{7*} wie zuvor definiert sind, COCl, OH, (vorzugsweise ist einer der Reste R¹¹, R¹² und R¹³ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei C₁ bis C₆ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus C₁-C₄ Alkoxy, Aryl, Heterocyclyl, C(=Y*)R^{5*} (wobei R^{5*} wie zuvor definiert ist), C(=Y*)NR^{6*}R^{7*} (wobei R^{6*} und R^{7*} wie zuvor definiert sind), Oxiranyl und Glycidyl substituiert sind; (vorzugsweise sind nicht mehr als 2 der Reste R¹¹, R¹² und R¹³ Wasserstoff, besonders bevorzugt ist maximal einer der Reste R¹¹, R¹² und R¹³ Wasserstoff);
m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;
Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von 10⁻⁴ mol/L bis 3 mol/L, vorzugsweise im Bereich von 10⁻³ mol/L bis 10⁻¹ mol/L und besonders bevorzugt im Bereich von 5*10⁻² mol/L bis 5*10⁻¹ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von 10⁻⁴ zu 1 bis 0,5 zu 1, besonders bevorzugt im Bereich von 1*10⁻³ zu 1 bis 5*10⁻² zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. Y(M)_{z}-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Co, Cr, Ne, Sm, Mn, Mo, Ag, Zn, Pd, Pt, Re, Rh, Ir, In, Yb, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar Cu⁺/Cu²⁺ oder Fe²⁺/Fe³⁺ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören Cu₂O, CuBr, CuCl, CuI, CuN₃, CuSCN, CuCN, CuNO₂, CuNO₃, CuBF₄, Cu(CH₃COO) Cu(CF₃COO), FeBr₂, RuBr₂, CrCl₂ und NiBr₂.

Es können aber auch Verbindungen in höheren Oxidationsstufen, wie beispielsweise CuBr₂, CuCl₂, CuO, CrCl₃, Fe₂O₃ und FeBr₃, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Die Menge an in der Polymerisationszusammensetzung vorhandenem wirksamen Katalysator kann über einen großen Bereich variieren. Besonders günstig verläuft die Polymerisation im Rahmen der Erfindung dann, wenn die Menge an wirksamem eingesetztem Übergangsmetallkatalysator > 200 ppm ist, bezogen auf das gesamte Gewicht der Polymerisationszusammensetzung, vermindert um den gegebenenfalls in der Polymerzusammensetzung vorhandenen Anteil einer Quelle, die den wirksamen Anteil des Katalysators erst freisetzt. Wird beispielsweise in Gegenwart von Kupfer der Oxidationsstufe 0 als Quelle für den wirksamen Anteil des Katalysators polymerisiert, ist diejenige Menge an Kupfer von Bedeutung (wirksam), die während der Polymerisation in der Polymerisationszusammensetzung als oxidiertes Kupfer der Oxidationsstufen (I) und (II), vorzugsweise der Oxidationsstufe (I), vorliegt. Die Menge an Kupfer der Oxidationsstufe (II) wird aufgrund der angewandten Bestimmungsmethoden zusammen mit Kupfer der Oxidationsstufe (I) bilanziert.

Für die Bestimmung der gemäß vorliegender Erfindung relevanten Menge (Konzentration) an Übergangsmetall kann man in Abhängigkeit von der Natur der Quelle aus welcher das Übergangsmetall stammt beispielsweise folgende Wege einschlagen.

Geht man vom Metall, z. B. Kupfer, als Quelle aus, so kann man die metallische Quelle nach Beendigung der Polymerisation aus der Zusammensetzung entfernen, z. B. aus dem Ansatz herausnehmen oder durch Filtration abtrennen. In der verbliebenen Polymerzusammensetzung kann gegebenenfalls nach Durchführung an sich bekannter Aufschlußverfahren die Menge des Metalls z. B. durch Atomabsorptionsspektroskopie (AAS) oder Atomemissionsspektroskopie (AES) bestimmt werden. Ermittelt wird demnach die Menge und daraus die Konzentration an Metall derjenigen Oxidationsstufe, die im Verlauf der Polymerisation aus der metallischen Quelle freigesetzt wurde (oxidiert wurde).

Geht man von einer Übergangsmetallverbindung (z.B. Kupfersalz oder Eisensalz) als Quelle aus, so genügt es die Einwaage zu bestimmen und daraus die im System vorhandene maximale Menge des Übergangsmetalls der relevanten Oxidationsstufen abzuleiten.

Wie erwähnt können die Übergangsmetalle als Metall in der Oxidationsstufe null, insbesondere in Mischung mit den zuvor genannten Verbindungen zur Katalyse verwendet werden, wie dies beispielsweise auch bereits in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel R¹⁶-Z-(R¹⁸-Z)ₘ-R¹⁷ darstellen, worin R¹⁶ und R¹⁷ unabhängig H, C₁ bis C₂₀ Alkyl, Aryl, Heterocyclyl bedeuten, die ggf. substituiert sein können. Zu diesen Substituenten zählen u. a. Alkoxyreste und die Alkylaminoreste. R¹⁶ und R¹⁷ können ggf. einen gesättigten, ungesättigten oder heterocyclischen Ring bilden. Z bedeutet O, S, NH, NR¹⁹ oder PR¹⁹, wobei R¹⁹ die gleiche Bedeutung wie R¹⁶ hat. R¹⁸ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R, die gleich Bedeutung hat, wie R¹⁶ hat.

Eine weitere Gruppe von geeigneten Liganden läßt sich durch die Formel 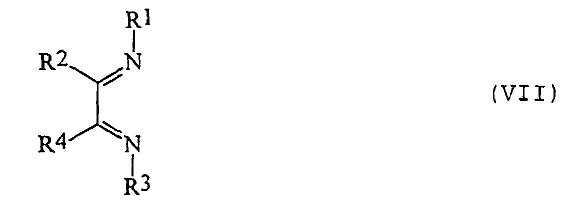 darstellen, worin R¹, R², R³ und R⁴ unabhängig H, C₁ bis C₂₀ Alkyl-, Aryl-, Heterocyclyl- und/oder Heteroarylrest bedeuten, wobei die Reste R¹ und R² bzw. R³ und R⁴ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N''-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsverfahrens. Zu diesen Strukturen gehören unter anderem Blockcopolymere, Gradientencopolymere, Sternpolymere, hochverzweigte Polymere, Polymere mit reaktiven Endgruppen und Pfropfcopolymere. Die so hergestellten Polymere weisen im allgemeinen ein Molekulargewicht im Bereich von 1 000 bis 1 000 000 g/mol, vorzugsweise im Bereich von 10*10³ bis 500*10³ g/mol und besonders bevorzugt im Bereich von 20*10³ bis 300*10³ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch M_{w}/Mₙ gegeben ist, im Bereich von 1 bis 12, vorzugsweise 1 bis 4,5, besonders bevorzugt 1 bis 3 und ganz besonders bevorzugt 1,05 bis 2 auf.

Gemäß einem interessanten Gesichtspunkt des erfindungsgemäßen Verfahrens kann der Katalysator nach der Polymerisation durch ein Fest-Flüssig-Trennverfahren abgetrennt werden. Hierzu gehören beispielsweise die Chromatographie, die Zentrifugation und die Filtration.

Vorzugsweise wird der Katalysator durch Filtration entfernt. Dazu wird nach der Polymerisation die Oxidationsstufe des Übergangsmetalls erhöht. Durch die Oxidation des Übergangsmetalls nimmt die Löslichkeit des Katalysators, je nach Wahl des oder der Liganden ab, so daß das Übergangsmetall durch Filtration abgetrennt werden kann, falls ein Lösungsmittel, insbesondere ein Mineralöl vorhanden ist, dessen Dielektrizitätskonstante ≤ 4, vorzugsweise ≤ 3 und besonders bevorzugt ≤ 2,5 ist.

Die Oxidation des Übergangsmetalls kann mit bekannten Oxidationsmitteln wie beispielsweise Sauerstoff, H₂O₂ oder Ozon durchgeführt werden. Vorzugsweise wird der Katalysator mit Luftsauerstoff oxidiert. Es ist keine vollständige Oxidation des Übergangsmetalls oder der Übergangsmetallverbindung notwendig. In vielen Fällen genügt ein Kontakt der Zusammensetzung mit Luftsauerstoff von wenigen Minuten, um eine ausreichende Ausfällung der Übergangsmetallverbindung zu gewährleisten.

Das Filtrieren ist an sich bekannt und beispielsweise in Ullmann's Encyclopedia of Industrial Chemistry, Fifth Edition, Stichwort "Filtration", beschrieben. Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 µm bis 1 mm, vorzugsweise 1 µm bis 100 µm und besonders bevorzugt 10 µm bis 100 µm gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung.

Die so hergestellte Poly(meth)acrylatzusammensetzung kann ohne weitere Reinigung beispielsweise als Additiv in Schmierölen verwendet werden. Darüber hinaus kann aus der Zusammensetzung das Polymer isoliert werden. Hierzu können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

### Beispiele 1 bis 4

Die ATRP-Polymerisationsversuche in Mineralöl wurden gemäß der nachfolgenden allgemeinen Versuchsvorschrift durchgeführt.

Die ATRP-Polymerisationsversuche wurden in einem Vierhalsrundkolben durchgeführt, der mit Säbelrührer, Heizpilz, Stickstoffüberleitung und Intensivkühler ausgestattet war. Dabei wurde das Monomergemisch, welches aus 258,2 g eines Alkylmethacrylatgemisches von C₁₂ bis C₁₈ Alkoholen und 29 g Methylmethacrylat bestand, und 72,5 g Mineralöl (SM 920 der Fa. Shell; Zusammensetzung: 0,84 % n-Alkane mit ca. 18 bis 31 C-Atomen, 5,16 % gering verzweigte Alkane mit 18 bis 31 C-Atomen, 8,8 % Aromaten mit 14 bis 32 C-Atomen, 71,4% Iso- und Cyclo-Alkane mit 20 bis 32 C-Atomen, 0,6% polare Verbindungen, 13,2% Verlust) im Reaktionskolben vorgelegt und durch Trockeneiszugabe und Überleiten von Stickstoff inertisiert. Anschließend wurde die entsprechende Menge an Katalysator, jeweils CuBr und Ligand (Pentamethyldiethylentriamin (PMDETA) oder Bipyridin (bipy)) zugegeben.

Nach Aufheizen auf die 90°C wurde die entsprechende Menge Initiator (Ethyl-2-bromisobutyrat (EBiB) oder para-Toluolsulfonylchlorid (pTSCl)) zugegeben. Die Temperatur im Reaktionskolben wurde auf 100°C oder 105 °C erhöht. Nach einer Reaktionszeit von ca. 20 Stunden bei der in Tabelle angegebenen Temperatur wurde die Mischung auf Raumtemperatur abgekühlt. Anschließend wurde das Produkt mit Mineralöl verdünnt und filtriert, um den Übergangsmetallkatalysator abzutrennen. Diese Mischung wurde mittels GPC analysiert.

Die Mengen der jeweils eingesetzten Komponenten sowie die Reaktionstemperatur sind in Tabelle 1 dargelegt. In Tabelle 2 sind die erhaltenen Ergebnisse, wie Umsatz der Polymerisation, Zahlenmittel des Molekulargewichts Mn und Polydispersität PDI der erhaltenen Polymere zusammengefaßt.

### Vergleichsbeispiele 1 bis 4

Die Vergleichsversuche wurden analog den Beispielen durchgeführt, wobei jedoch anstatt Mineralöl 72,5 g n-Dekan eingesetzt wurden

Die Mengen der jeweils eingesetzten Komponenten sowie die Reaktionstemperatur sind in Tabelle 1 dargelegt. In Tabelle 2 sind die erhaltenen Ergebnisse, wie Umsatz der Polymerisation, Zahlenmittel des Molekulargewichts Mn und Polydispersität PDI (Mw/Mn) der erhaltenen Polymere zusammengefaßt.

**Tabelle 1**

| | Katalysator [g] | Ligand [g] | Initiator [g] | Temperatur [°C] |
|---|---|---|---|---|
| Beispiel 1 | 0,54 | 0,65 PMDETA | 1,42 pTSCl | 100 |
| Vergl. 1 | 0,54 | 0,65 PMDETA | 1,42 pTSCl | 100 |
| Beispiel 2 | 0,64 | 2,1 bipy | 1,42 pTSCl | 105 |
| Vergl. 2 | 0,64 | 2,1 bipy | 1,42 pTSCl | 105 |
| Beispiel 3 | 0,54 | 0,65 PMDETA | 1,45 EBiB | 100 |
| Vergl. 3 | 0,54 | 0,65 PMDETA | 1,45 EBiB | 100 |
| Beispiel 4 | 1,34 | 2,92 bipy | 1,46 EBiB | 105 |
| Vergl. 4 | 1,34 | 2,92 bipy | 1,46 EBiB | 105 |

**Tabelle 2**

| | Umsatz [%] | Mn [g/mol] | PDI |
|---|---|---|---|
| Beispiel 1 | 97,9 | 41.850 | 1,16 |
| Vergl. 1 | 86,3 | 32.310 | 1, 38 |
| Beispiel 2 | 52,0 | 20.270 | 1,82 |
| Vergl. 2 | 75,8 | 53.360 | 3,91 |
| Beispiel 3 | 98,9 | 37.500 | 1,17 |
| Vergl. 3 | 93,0 | 35.860 | 1,29 |
| Beispiel 4 | 50,2 | 48.940 | 1,46 |
| Vergl. 4 | 8,6 | 28,810 | 1,77 |

## Patentansprüche

1. Verfahren zur Herstellung von Poly(meth)acrylatzusammensetzungen, bei dem man ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, **dadurch gekennzeichnet, daß** man ethylenisch ungesättigte Monomere, die 50 bis 100 Gew.-%, bezogen auf das Gesamtgewicht der ethylenisch ungesättigten Monomere, einer oder mehreren ethylenisch ungesättigten Esterverbindungen der Formel (I) 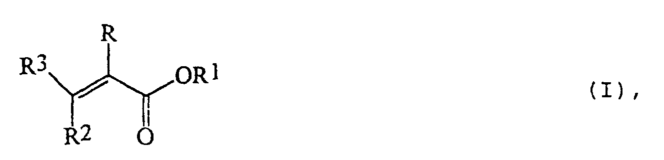 worin R Wasserstoff oder Methyl, R¹ einen linearen oder verzweigten Alkylrest mit 6 bis 40 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt, aufweisen, in Gegenwart von 5 bis 95 Gew.-% Mineralöl, bezogen auf das Gesamtgewicht der Zusammensetzung, polymerisiert.

2. Verfahren gemäß Anspruch 1, **dadurch gekennzeichnet, daß** man ein Mineralöl einsetzt, welches 0,5 bis 30 Gew.-% aromatische Anteile, 15 bis 40 Gew.-% naphthenische Anteile, 35 bis 80 Gew.-% paraffinische Anteile, bis zu 3 Gew.-% n-Alkane und 0,05 bis 5 Gew.-% polare Verbindungen, jeweils bezogen auf das Gesamtgewicht des Mineralöls, enthält.

3. Verfahren gemäß Anspruch 1 oder 2, **dadurch gekennzeichnet, daß** man das Mineralöl in einer Menge von 10 bis 60 Gew.-%, bezogen auf das Gesamtgewicht der Zusammensetzung, einsetzt.

4. Verfahren nach einem oder mehreren der vorhergehenden Ansprüche, **dadurch gekennzeichnet, daß** man eine Monomerzusammensetzung polymerisiert aufweisend mindestens 50 Gew.-% eines oder mehrerer (Meth)acrylate der Formel (II) 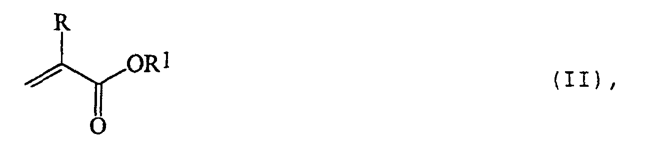 worin
R Wasserstoff oder Methyl und R¹ einen linearen oder verzweigten Alkylrest mit 6 bis 40 Kohlenstoffatomen bedeuten.

5. Verfahren nach einem oder mehreren der vorhergehenden Ansprüche, **dadurch gekennzeichnet, daß** man eine Monomerzusammensetzung polymerisiert aufweisend
a) 60 bis 100 Gew.-% einer oder mehreren ethylenisch ungesättigten Esterverbindungen der Formel (I) 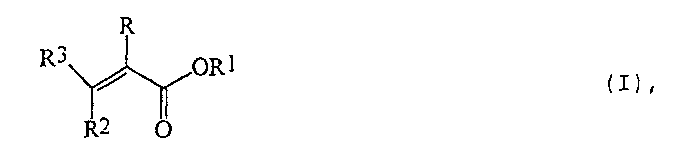 worin R Wasserstoff oder Methyl, R¹ einen linearen oder verzweigten Alkylrest mit 6 bis 40 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt,
b) 0 bis 40 Gew.-% eines oder mehrerer
(Meth)acrylate der Formel (III) 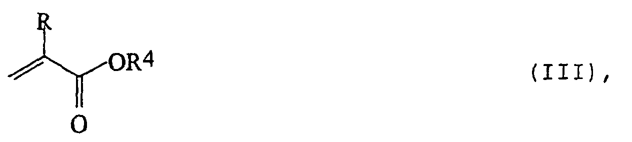 worin R Wasserstoff oder Methyl und R⁴ einen linearen oder verzweigten Alkylrest mit 1 bis 5 Kohlenstoffatomen bedeuten,
c) 0 bis 40 Gew.-% eines oder mehrerer
(Meth)acrylate der Formel (IV) 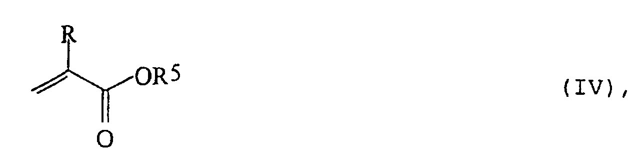 worin R Wasserstoff oder Methyl und R⁵ einen mit einer OH-Gruppe substituierten Alkylrest mit 2 bis 20 Kohlenstoffatomen oder einen alkoxylierten Rest der Formel (V) 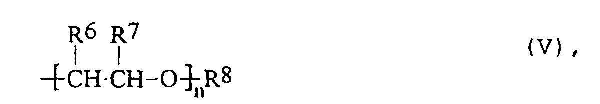 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-% eines oder mehrerer
(Meth)acrylate der Formel (VI) 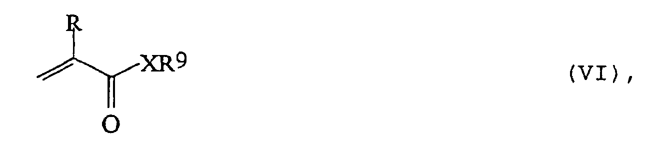 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-% eines oder mehrerer Comonomere, wobei sich die Angabe Gew.-% jeweils auf das Gesamtgewicht der ethylenisch ungesättigten Monomere bezieht.

6. Verfahren nach Anspruch 5, **dadurch gekennzeichnet, daß** man als Comonomere Styrol, (Meth)acrylat-Derivate und/oder dispergierende Monomere einsetzt.

7. Verfahren gemäß einem oder mehreren der vorhergehenden Ansprüche, **dadurch gekennzeichnet, daß** man Cu₂O, CuBr, CuCl, CuI, CuN₃, CuSCN, CuCN, CuNO₂, CuNO₃, CuBF₄, Cu(CH₃COO) oder Cu(CF₃COO) als Katalysator einsetzt.

8. Verfahren gemäß einem oder mehreren der vorhergehenden Ansprüche, **dadurch gekennzeichnet, daß** man mindestens einen Chelatliganden einsetzt, der N-Atome enthält.

9. Verfahren gemäß einem oder mehreren der vorhergehenden Ansprüche, **dadurch gekennzeichnet, daß** man einen Initiator einsetzt, der Cl, Br, I, SCN und/oder N₃ aufweist.

10. Verfahren gemäß einem oder mehreren der vorhergehenden Ansprüche, **dadurch gekennzeichnet, daß** man den Katalysator durch Fest-Flüssig-Trennung abtrennt.

11. Verfahren zur Herstellung von Polymeren, **dadurch gekennzeichnet, daß** man aus einer Polymerlösung, die gemäß einem oder mehreren der Verfahren 1 bis 10 erhalten wurde, das Polymer isoliert.

12. Verwendung einer Polymerzusammensetzung, die nach einem Verfahren gemäß einem oder mehreren Ansprüche der 1 bis 11 erhalten wurde, als Zusatz zu Schmierölen.

## Claims

1. Process for preparing poly(meth)acrylate compositions, wherein ethylenically unsaturated monomers are polymerised by means of initiators which have a transferable atomic group, and one or more catalysts which have at least one transition metal, in the presence of ligands which are able to form a coordination compound with the metallic catalyst or catalysts, **characterised in that** ethylenically unsaturated monomers which comprise 50 to 100 wt.% , based on the total weight of the ethylenically unsaturated monomers, of one or more ethylenically unsaturated ester compounds of formula (I) 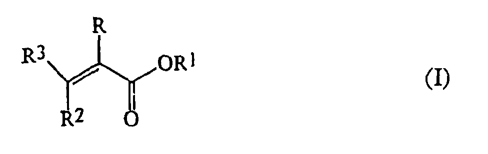 wherein R denotes hydrogen or methyl, R¹ denotes a straight-chain or branched alkyl group having 6 to 40 carbon atoms, R² and R³ independently represent hydrogen or a group of formula -COOR', where R' denotes hydrogen or a straight-chain or branched alkyl group having 6 to 40 carbon atoms, are polymerised in the presence of 5 to 95 wt.% of mineral oil, based on the total weight of the composition.

2. Process according to claim 1, **characterised in that** a mineral oil is used which contains 0.5 to 30 wt.% of aromatic ingredients, 15 to 40 wt.% of naphthenic ingredients, 35 to 80 wt.% of paraffinic ingredients, up to 3 wt.% of n-alkanes and 0.05 to 5 wt.% of polar compounds, in each case based on the total weight of the mineral oil.

3. Process according to claim 1 or 2, **characterised in that** the mineral oil is used in an amount of 10 to 60 wt.%, based on the total weight of the composition.

4. Process according to one or more of the preceding claims, **characterised in that** a monomer composition is polymerised comprising at least 50 wt.% of one or more (meth)acrylates of formula (II) 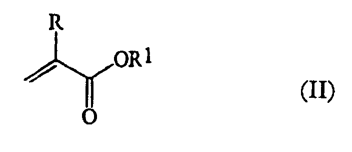 wherein
R denotes hydrogen or methyl and R¹ denotes a straight-chain or branched alkyl group having 6 to 40 carbon atoms.

5. Process according to one or more of the preceding claims, **characterised in that** a monomer composition is polymerised comprising
a) 60 to 100 wt.% of one or more ethylenically unsaturated ester compounds of formula (I) 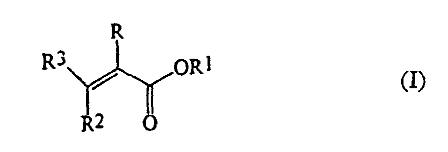 wherein R denotes hydrogen or methyl, R¹ denotes a straight-chain or branched alkyl group having 6 to 40 carbon atoms, R² and R³ independently represent hydrogen or a group of formula -COOR', where R' denotes hydrogen or a straight-chain or branched alkyl group having 6 to 40 carbon atoms,
b) 0 to 40 wt.% of one or more (meth)acrylates of formula (III) 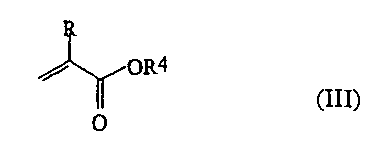 wherein R denotes hydrogen or methyl and R⁴ denotes a straight-chain or branched alkyl group having 1 to 5 carbon atoms,
c) 0 to 40 wt.% of one or more (meth)acrylates of formula (IV) 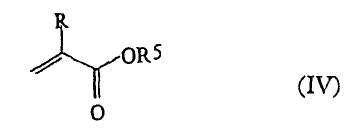 wherein R denotes hydrogen or methyl and R⁵ denotes an alkyl group having 2 to 20 carbon atoms substituted by an OH group, or an alkoxylated group of formula (V) 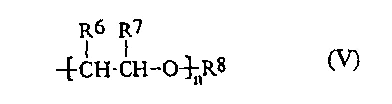 wherein R⁶ and R⁷ independently represent hydrogen or methyl, R⁸ denotes hydrogen or an alkyl group having 1 to 40 carbon atoms and n denotes an integer from 1 to 60,
d) 0 to 40 wt.% of one or more (meth)acrylates of formula (VI) 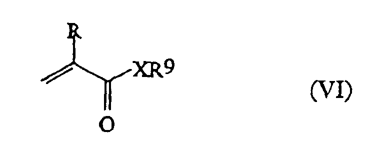 wherein R denotes hydrogen or methyl, X denotes oxygen or an amino group of the formula -NH- or -NR¹⁰-, wherein R¹⁰ denotes an alkyl group having 1 to 40 carbon atoms, and R⁹ denotes a straight-chain or branched alkyl group having 2 to 20, preferably 2 to 6 carbon atoms, which is substituted by at least one -NR¹¹R¹²- group, where R¹¹ and R¹² independently of each other denote hydrogen, an alkyl group having 1 to 20, preferably 1 to 6, or wherein R¹¹ and R¹² including the nitrogen atom and optionally a further nitrogen or oxygen atom form a 5- or 6-membered ring which may optionally be substituted by C₁-C₆-alkyl, and
e) 0 to 40 wt.% of one or more comonomers, the percentage by weight specified relating in each case to the total weight of the ethylenically unsaturated monomers.

6. Process according to claim 5, **characterised in that** styrene, (meth)acrylate derivatives and/or dispersing monomers are used as comonomers.

7. Process according to one or more of the preceding claims, **characterised in that** Cu₂O, CuBr, CuCl, CuI, CuN₃, CuSCN, CuCN, CuNO₂, CuNO₃, CuBF₄, Cu(CH₃COO) or Cu(CF₃COO) is used as catalyst.

8. Process according to one or more of the preceding claims, **characterised in that** at least one chelate ligand which contains N-atoms is used.

9. Process according to one or more of the preceding claims, **characterised in that** an initiator is used which contains Cl, Br, I, SCN and/or N₃.

10. Process according to one or more of the preceding claims, **characterised in that** the catalyst is separated off by solid-liquid separation.

11. Process for preparing polymers, **characterised in that** the polymer is isolated from a polymer solution which has been obtained according to one or more of processes 1 to 10.

12. Use of a polymer composition which has been obtained by a process according to one or more of claims 1 to 11, as an additive for lubricating oils.

## Revendications

1. Procédé de préparation de compositions de poly(meth)acrylates, dans lequel on polymérise des monomères éthyléniquement insaturés au moyen d'initiateurs qui comportent un groupe d'atomes transmissible, et un ou plusieurs catalyseur(s), comprenant au moins un métal de transition, en présence de coordinats qui forment un composé de coordination avec le ou les catalyseur(s) métallique(s),
**caractérisé en ce qu'**
on polymérise des monomères éthyléniquement insaturés, qui comportent de 50 % à 100 % en poids, rapporté au poids total des monomères éthyléniquement insaturés, d'un ou plusieurs composé(s) esters éthyléniquement insaturé(s) répondant à la formule (I): 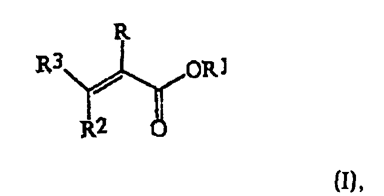 dans laquelle R représente un atome d'hydrogène ou un groupe méthyle, R¹ représente un reste alkyle linéaire ou ramifié comportant de 6 à 40 atomes de carbone, R² et R³ représentent, indépendamment, un atome d'hydrogène ou un groupe, de formule -COOR'- dans laquelle R' représente un atome d'hydrogène ou un reste alkyle linéaire ou ramifié comportant de 6 à 40 atomes de carbone, en présence de 5 % à 95 % en poids d'huile minérale, rapporté au poids total de la composition.

2. Procédé selon la revendication 1,
**caractérisé en ce qu'**
on utilise une huile minérale qui contient de 0,5 % à 30 % en poids de fractions aromatiques, de 15 % à 40 % en poids de fractions naphthéniques, de 35 % à 80 % en poids de fractions paraffiniques, jusqu'à 3 % en poids de n-alcanes et de 0,05 % à 5 % en poids de composés polaires, dans chaque cas rapporté au poids total de l'huile minérale.

3. Procédé selon la revendication 1 ou 2,
**caractérisé en ce qu'**
on utilise l'huile minérale dans une proportion de 10 % à 60 % en poids, rapporté au poids total de la composition.

4. Procédé selon une ou plusieurs des revendications précédentes,
**caractérisé en ce qu'**
on polymérise une composition de monomères comportant au moins 50 % en poids d'un ou plusieurs méthacrylate(s) répondant à la formule (II) 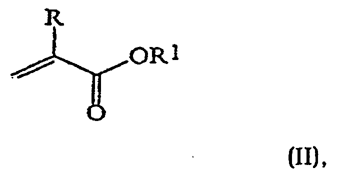 dans laquelle R représente un atome d'hydrogène ou un groupe méthyle et R¹ représente un groupe alkyle linéaire ou ramifié comportant de 6 à 40 atomes de carbone.

5. Procédé selon une ou plusieurs des revendications précédentes,
**caractérisé en ce qu'**
on polymérise une composition de monomères comportant:
a) de 60 % à 100 % en poids d'un ou plusieurs composé(s) ester(s) éthyléniquement insaturé(s) répondant à la formule (I), 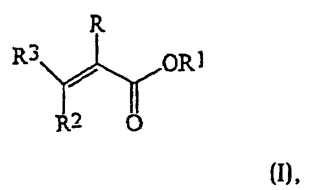 dans laquelle R représente un atome d'hydrogène ou un groupe méthyle, R¹ représente un reste alkyle linéaire ou ramifié comportant de 6 à 40 atomes de carbone, R² et R³ représentent indépendamment un atome d'hydrogène ou un groupe répondant à la formule -COOR', dans laquelle R' représente un atome d'hydrogène ou un reste alkyle, linéaire ou ramifié, comportant de 6 à 40 atomes de carbone,
b) de 0 % à 40 % en poids d'un ou plusieurs (méth)acrylate(s) répondant à la formule (III) 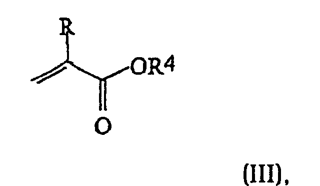 dans laquelle R représente un atome d'hydrogène ou un groupe alkyle et R⁴ représente un reste alkyle linéaire ou ramifié comportant de 1 à 5 atome(s) de carbone,
c) de 0 % à 40 % en poids d'un ou plusieurs (méth)acrylate(s) répondant à la formule (IV), 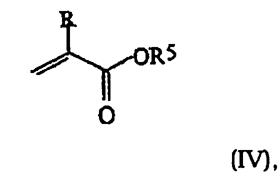 dans laquelle R représente un atome d'hydrogène ou un groupe méthyle et R⁵ représente un reste alkyle substitué par un groupe OH, comportant de 2 à 20 atomes de carbone, ou un reste alcoxylé répondant à la formule (V) 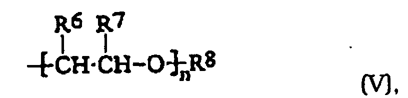 dans laquelle R⁶ et R⁷ représentent indépendamment un atome d'hydrogène ou un groupe méthyle et R⁸ représente un atome d'hydrogène ou un reste alkyle comportant de 1 à 40 atome(s) de carbone et n représente un nombre entier de 1 à 60.
d) de 0 % à 40 % en poids d'un ou plusieurs (méth)acrylate(s) répondant à la formule (VI) 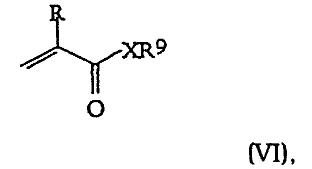 dans laquelle R représente un atome d'hydrogène ou un groupe méthyle, x représente un atome d'oxygène ou un groupe amino répondant à la formule -NH- ou -NR¹⁰-, dans laquelle R¹⁰ représente un reste alkyle comportant de 1 à 40 atome(s) de carbone, et R⁹ représente un reste alkyle linéaire ou ramifié substitué par au moins un groupe -NR¹¹R¹²-, comportant de 2 à 20, de préférence de 2 à 6 atomes de carbone, R¹¹ et R¹² représentant, indépendamment l'un de l'autre, un atome d'hydrogène, un reste alkyle comportant de 1 à 20 atome(s), de préférence de 1 à 6 atome(s) de carbone, ou dans lequel R¹¹ et R¹² forment, avec incorporation de l'atome d'azote et le cas échéant d'un autre atome d'azote ou d'un atome d'oxygène, un cycle à 5 ou 6 membres, qui peut être, le cas échéant, substitué par un groupe alkyle en C₁-C₆, et
e) de 0 % à 40 % en poids d'un ou plusieurs comonomère(s), l'indication en % en poids se rapportant à chaque fois au poids total des monomères éthyléniquement insaturés.

6. Procédé selon la revendication 5,
**caractérisé en ce qu'**
on utilise, comme comonomères, le styrène, des dérivés de (méth)acrylates et/ou des monomères dispersants.

7. Procédé selon une ou plusieurs des revendications précédentes,
**caractérisé en ce qu'**
on utilise Cu₂O, CuBr, CuCl, CuI, CuN₃, CuSCN, CuCN, CuNO₂, CuNO₃, CuBF₄, Cu(CH₃COO) ou Cu(CF₃COO) comme catalyseurs.

8. Procédé selon une ou plusieurs des revendications précédentes,
**caractérisé en ce qu'**
on utilise au moins un coordinat chélate qui contient des atomes d'azote.

9. Procédé selon une ou plusieurs des revendications précédentes,
**caractérisé en ce qu'**
on utilise un initiateur qui comporte Cl, Br, I, SCN et/ou N₃.

10. Procédé selon une ou plusieurs des revendications précédentes,
**caractérisé en ce qu'**
on sépare le catalyseur par séparation solide - liquide.

11. Procédé pour la préparation de polymères,
**caractérisé en ce qu'**
on isole le polymère à partir une solution de polymère qui a été obtenue par un ou plusieurs des procédés selon les revendications 1 à 10.

12. Utilisation d'une composition de polymères qui a été obtenue selon un ou plusieurs des procédés selon les revendications 1 à 11, comme additif à des huiles lubrifiantes.
